# EUROPEAN PATENT APPLICATION

(11) **EP 2 228 600 A1**
(43) Date of publication of application: **15.09.2010**
(21) Application number: 08388022.9
(22) Date of filing: 17.06.2008
(51) Int. Cl.: F22B 33/00, B63H 21/14, F22B 35/00, F01K 3/24

(54) **Combination boiler system comprising a bypass for a waste heat recovery boiler**

(71) Applicant: Aalborg Industries A/S, 9100 Aalborg (DK)
(72) Inventor: The designation of the inventor has not yet been filed
(74) Representative: Tonnesen, Bo

(57) **Abstract**

The invention relates to an energy saving device and a method for energy saving in waste heat recovery systems for combustion engines during engine standstill or idling comprising exhaust gas boilers and oil fired boilers combined in a forced flow combination steam generation system.

## Description

The invention relates to waste heat recovery boiler systems and in particular to a combination forced water flow boiler system comprising an exhaust gas boiler, an oil fired boiler with a shared steam drum and water reservoir and a circulation pump.

### BACKGROUND OF THE INVENTION

Several industrial energy processes give out useful heat, which is normally carried away by the emitted gases. Combustion engines like marine main engines give out up to 25% of the fuel energy as exhaust gas heat. Recovering this heat through a process integrated waste heat recovery boiler is beneficial. Waste heat recovery boilers meet the two objectives of cooling process gases and recover the useful heat from them to produce medium and/or high-pressure steam for utility purposes.

The process integrated waste heat recovery boilers are available in water tube or fire tube versions to suit individual process requirements. Additionally, an option for auxiliary firing are often provided with the waste heat recovery system for keeping up the utility purposes when the heat recovery boiler is not exposed to sufficient exhaust gas flow caused by standstill or low activity of main engine.

The exhaust gas boiler (EGB) recovers the heat from the fuel for instance of diesel engines to generate steam / hot water or useful heat for process heating / cooling. The exhaust gas boiler is available in various configurations. Some of them are: single drum forced circulation exhaust gas boiler type, smoke tube exhaust gas boiler type, two drum or single drum natural circulation water tube exhaust gas boiler type, etc.

Exhaust gas boilers (EGB) in ship installations are normally finned water tube boilers. Water flows inside the tubes and exhaust gas outside the tubes. The exhaust gas side of the tubes is equipped with welded steel fins to improve heat transfer. In a combination boiler system a supplementary oil fired boiler (OFB) is connected for supplying steam when the main engine is running low or stopped. The steam drum of the OFB then acts as the steam receiver for the EGB. Water is pumped with circulation pump (CP) from OFB through the tube bank of the EGB, where part of the water evaporates. Steam /water mix flows back to the upper part of OFB, where water is separated of steam.

A common problem in heat recovery boilers and in particular water tube exhaust gas type of boilers is soot deposits and the consequently risk of soot fire. In order to make the boiler as efficient and compact as possible, the heat transfer areas on the gas side of the tubes often are expanded with narrowly spaced fins or pin tubes. The soot deposits depending on conditions are able to ignite at temperatures as low as 300-400 degrees centigrade and can lead to soot fire, which can destroy the EGB completely and cause serious safety risk. Soot fire can be prevented, if water circulation is secured and/or the boiler is kept clean. Because efficient cleaning is not possible in all circumstances, proper water circulation is essential in fire prevention.

In order to avoid soot fires it is recommended to keep the circulation pump running also in harbour, even when the engine is not running, because glowing soot particles can ignite soot and cause a fire.

Excess water flow is necessary among other things to prevent local dry boiling in the EGB. If dry boiling occurs, surface temperature on the exhaust gas side rises up, which can cause ignition of accumulated soot on the exhaust gas side. Circulated water flow is usually 3...7 times the steaming capacity of the boiler.

When the engine is stopped, the tube bank of the EGB is still hot because circulation water flows through from the OFB. Instead of hot exhaust gas on the other side, which gives energy to the evaporating water, EGB works to the opposite direction: Hot circulation water gives energy to the air, which flows through open exhaust gas valves through the tube bank to the atmosphere. Energy loss has to be replaced by burning oil in the OFB and the loss is significant.

This energy waste from draught through the engine and EGB can be avoided by closing dampers on the suctions side or on the exhaust side. The dampers can be combined with dampers to on/off or by-pass ducts or valves for control of the amount of steam generated. Exhaust gas dampers and bypass pipelines are of a considerable size like 1 - 2 meters in diameter and operate at temperatures in the area of 300 - 400 degrees centigrade. Operating this type of dampers and valves in the very hot condition is very delicate and need very much security precautions and safe position control.

### SUMMARY OF THE INVENTION

It is an object of this invention to provide means and a method for reducing waste of energy in a combination boiler system caused by draught through the EGB in a very simple and effective approach. The combination boiler system for waste heat recovery from a main engine by steam generation comprises an exhaust gas boiler and an oil fired boiler system having an oil fired burner, a water reservoir, a steam drum shared between said oil fired boiler and said exhaust gas boiler and a continuously running circulation pump feeding said exhaust boiler through a pipeline from the water reservoir in said oil fired boiler system, and wherein the steam and residual water generated in said exhaust gas boiler is directed to said shared steam drum in said oil fired boiler system through a return pipeline. Said oil fired boiler system can according to the invention be bypassed by a recirculation system maintaining water flow through said circulation pump and said exhaust gas boiler, whereby draught loss in said exhaust gas boiler of energy developed in said oil fired boiler system is avoided during standstill of said main engine.

### BRIEF DESCRIPTION OF THE DRAWINGS

The invention will be better understood with reference to the following detailed description of an embodiment hereof taken in conjunction with the figures of the drawings where:
Fig. 1 shows a traditional combined waste heat recovery boiler system with traditional forced water flow.
Fig. 2 shows the same systems where the object of this invention is added. The system is shown in the normal running mode where the valve 8 is closed and the steam flows directly to the OFB 2.
Fig. 3 shows the system in fig. 2 with the valve 8 open. The water flows through the vessel 6 and valve 8 back to the pump 3.

### DETAILED DESCRIPTION OF THE INVENTION

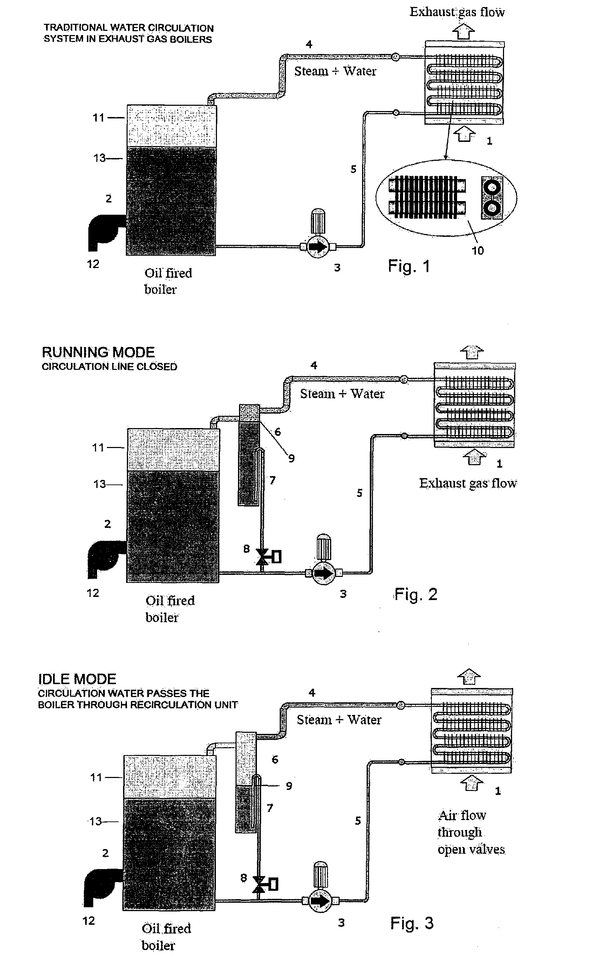

Fig. 1 shows a prior art combination waste heat recovery boiler system with traditional water flow. The circulation pump 3 feeds the EGB 1 with water from the reservoir 13 in the OFB. Steam is generated in the EGB 1 and fed to the shared steam drum 11 in the oil fired boiler 2. The reservoir 13 is fed supplementary from a process water source (not shown). If the exhaust gas flows through the EGB 1 is stopped or lowered by main engine standstill or idling, the water now heated by the OFB 2 still flows through the EGB 1. Since some of the valves always remain open, during engine standstill, air will flow as draught through the EGB, which will be heated by the OFB 2 and hereby create loss of energy.

An embodiment of the invention will now be described with reference to fig. 2 and 3. In fig. 2 and 3 a recirculation unit or bypass vessel 6 is inserted in the traditional water circulation system. The idea of the recirculation unit is that the circulation water bypasses the OFB 2 when the engine is not running. Bypass is carried out through a vertical vessel 6 located nearby OFB 2. Water level 9 of the vessel 6 is in balance with level of OFB2, because the vessel 6 and the chambers of the OFB are connected both at the bottom 5 and the upper side 4. Returning circulation water flows through a pipeline 4 to upper part of the vessel 6.

During engine stop or low activity no evaporation occurs in the EGB 1 causing the water level 9 in the vessel 6 to rise above the level in OFB 2 and water flows directly to the suction side of the pump 3. The pipeline from the vessel 6 is equipped with a water lock 7, which with a siphon effect prevents steam bubbles mix into the water.

After establishing bypass by means of opening the valve 8 the water is recirculated by means of the circulation pump 3 through the pipeline 5 and the EGB 1 and to the top side of the bypass vessel 6 where it liquefies and flow trough valve 8 back to the pump 3 and will be cooled down in couple of minutes. When the water temperature reaches the air temperature the heat from the OFB 2 is not anymore transferred to the air and energy loss is prevented.

When engine is running, the valve 8 in the bypass system is closed and water/steam mix flows directly through the vessel 6 to the shared steam drum 11 in the OFB 2 and the traditional water circulation for waste heat recovery is established.

## Claims

1. A combination boiler system for waste heat recovery from a main engine by steam generation comprising an exhaust gas boiler (1) and an oil fired boiler system (2) having an oil fired burner (12), a water reservoir (13), a steam drum (11) shared between said oil fired boiler and said exhaust gas boiler and a continuously running circulation pump (3) feeding said exhaust boiler (1) through pipeline (5) from the water reservoir (13) in said oil fired boiler system (2), and wherein the steam and residual water generated in said exhaust gas boiler (1) is directed to said shared steam drum (11) in said oil fired boiler system (2) through a return pipeline (4), **characterized in that** said oil fired boiler system (2) can be bypassed by a recirculation system maintaining water flow through said circulation pump (3) and said exhaust gas boiler (1), whereby draught loss in said exhaust gas boiler of energy developed in said oil fired boiler system (2) is avoided during standstill of said main engine.

2. A combination boiler system according to claim 1, **characterized by** said recirculation system having a vessel (6) with a water lock (7) whereby, it is avoided that steam bubbles from said oil fired boiler (2) is drawn into the circulation pump (3).

3. A combination boiler system according to claims 1-2, **characterized by** said vessel (6) having a sectional area at least two times the sectional area of the return pipe (4)

4. A combination boiler system according to claims 1-3, **characterized by** said recirculation system comprises a flow control valve (8)

5. A method to reduce energy loss in a combination boiler system according to claim 1 while said exhaust gas boiler (1) is not exposed to exhaust gas, **characterized in that** means for energy reduction is established as a water recirculation system and said water recirculation system bypasses flow through said oil fired boiler (2) and maintains water flow through said exhaust gas boiler (1) by means of said circulation pump (3).

6. A method according to claim 5, **characterized in that** said recirculation system comprises a vessel (6) with a water lock (7) whereby it is avoided that steam bubbles from said oil fired boiler (2) is sucked into the circulation pump (3).

7. A method according to claims 5-6, **characterized in that** recirculation in said recirculation system can be controlled by a valve (8) in the said recirculation system.
